# EUROPÄISCHE PATENTSCHRIFT

(11) **EP 2 054 597 B1**
(45) Veröffentlichungstag und Bekanntmachung des Hinweises auf die Patenterteilung: **30.09.2009**
(21) Anmeldenummer: 07802889.1
(22) Anmeldetag: 24.08.2007
(51) Int. Cl.: F02B 39/14

(54) **NOTÖLTANK**
EMERGENCY OIL TANK
RÉSERVOIR D'HUILE DE SECOURS

(30) Priorität: 24.08.2006 EP 06405362
(43) Veröffentlichungstag der Anmeldung: 06.05.2009
(73) Patentinhaber: ABB Turbo Systems AG, 5400 Baden (CH)
(72) Erfinder: DI PIETRO, Marco, CH-4665 Oftrignen (CH); STÄDELI, Markus, CH-8113 Boppelsen (CH); WITTWER, Andre, CH-5034 Suhr (CH); AMMANN, Bruno, CH-5000 Aarau (CH); NEUENSCHWANDER, Peter, CH-8006 Zürich (CH)
(74) Vertreter: ABB Patent Attorneys
(86) Internationale Anmeldenummer: PCT/EP2007/058848
(87) Internationale Veröffentlichungsnummer: WO 2008/023067

(56) Entgegenhaltungen:
- EP-A- 0 304 259
- JP-A- 7 097 930
- JP-A- 8 189 371
- JP-A- 62 101 837

## Beschreibung

### Technisches Gebiet

Die Erfindung bezieht sich auf das Gebiet der Abgasturbolader für aufgeladene Brennkraftmaschinen.

Sie betrifft einen im Abgasturboladergehäuse integrierten Notöltank.

### Stand der Technik

Abgasturbolader werden zur Leistungssteigerung von Brennkraftmaschinen, insbesondere Hubkolbenmotoren, eingesetzt. Dabei besitzt ein Abgasturbolader üblicherweise einen Radialverdichter und eine Radial- oder Axialturbine.

Notöltanks von Turboladern dienen dem sicheren Auslaufen des Turbolader-Rotors bei einem Notstopp des Motors infolge Ausfalls der Ölversorgung. Sie werden hauptsächlich auf 2-Takt-Motoren, wo die Ölpumpe elektrisch angetrieben wird, eingesetzt.

Der Notöltank ist über den Turbolader-Lagern angeordnet, so dass bei einem Ausfall der Ölversorgung das im Tank enthaltene Öl infolge Schwerkraft in und durch die Lager fliesst.

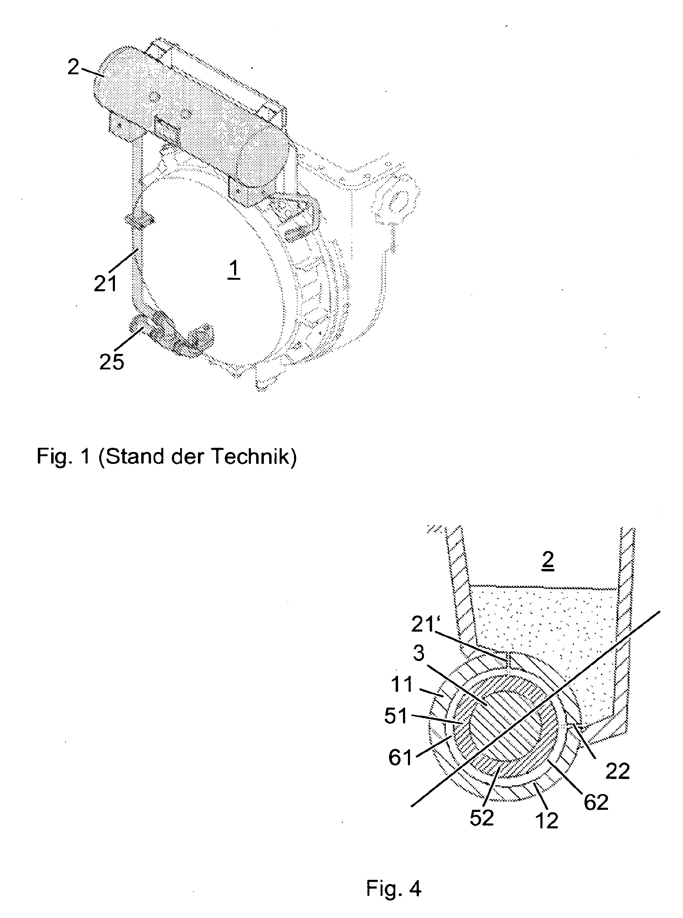

Herkömmliche Abgasturbolader weisen Notöltanks auf, welche entweder als externe Einheit oberhalb des Abgasturboladers, wie etwa in Fig. 1 dargestellt, oder aber ins Lagergehäuse integriert zwischen dem Verdichterrad und dem turbinenseitigen Gasaustrittsgehäuse angeordnet sind. Eine solche integrierte Lösung wird z. B. in JP 62 101 837 A gezeigt und ist etwa im ABB TPL85-B14 Abgasturbolader realisiert.

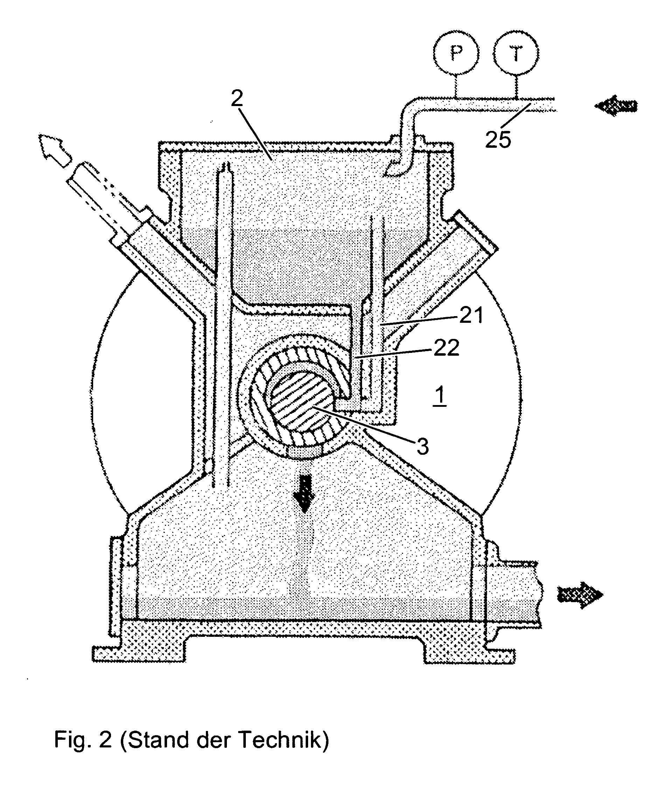

Der Mitsubishi MET Abgasturbolader, dessen Notölversorgungssystem in Fig. 2 schematisch dargestellt ist, verfügt über eine separate Speisung des verdichter- und des turbinenseitigen Radiallagers aus einem Notöltank, um das heissere turbinenseitige Lager bei einem Notstopp länger mit Öl versorgen zu können.

Ein derart angeordneter Notöltank erfordert relativ lange, kostenintensive Zuleitungen zu den Radiallagern.

### Kurze Darstellung der Erfindung

Aufgabe der Erfindung besteht darin, einen Notöltank derart im Lagergehäuse zu integrieren, dass bei einem Notstopp des Motors infolge Ausfalls der Ölversorgung der Turbolader-Rotor jederzeit sicher Auslaufen kann.

Durch eine Anordnung des Notöltanks direkt über allen Radiallagern können das verdichterseitige und das turbinenseitige Radiallager durch je eine Durchführung im Notöltank direkt über dem Lager versorgt und die Zuleitungen damit stark gekürzt werden.

Die Nähe des Notöltanks zum Gasaustrittsgehäuse bewirkt einen grösseren Wärmeübergang vom Abgas an den Notöltank und somit eine stärkere Vorwärmung des Öls im Tank, was bei 2-Takt-Turboladern aufgrund der üblicherweise tiefen Öleintrittstemperatur von nur etwa 45°C zur Verminderung der Lagerverluste erwünscht ist.

### Kurze Beschreibung der Zeichnungen

Im folgenden ist anhand der Figuren die erfindungsgemässe Vorrichtung schematisch dargestellt und näher erläutert.

In allen Figuren sind gleichwirkende Elemente mit gleichen Bezugszeichen versehen:
- Fig. 1: zeigt ein Lagergehäuse eines Abgasturboladers mit einem aufgesetzen Notöltank gemäss dem Stand der Technik,
- Fig. 2: zeigt ein Notölversorgungssystem eines Abgasturboladers mit separater Speisung von turbinenseitigem und verdichterseitigem Lager gemäss dem Stand der Technik,
- Fig. 3: zeigt einen entlang der Achse eines Abgasturboladers geführten Schnitt durch das Lagergehäuse mit einer ersten Ausführungsform eines erfindungsgemäss integrierten Notöltanks, und
- Fig. 4: zeigt einen senkrecht zur Achse eines Abgasturboladers geführten Schnitt durch das Lagergehäuse mit einher zweiten Ausführungsform des erfindungsgemäss integrierten Notöltanks.

### Weg zur Ausführung der Erfindung

Wie Eingangs erwähnt, zeigen Fig. 1 und Fig. 2 herkömmliche Notölversorgungssysteme von Abgasturboladern. Fig. 1 zeigt dabei einen extern aufgesetzten Notöltank 2, welcher mittels einer Haltevorrichtung oberhalb des Lagergehäuses 1 befestigt ist. Eine Zuleitung 21, welche von der Ölzufuhrleitung 25 des Abgasturboladers abgezweigt wird, leitet Öl in den Notöltank. Im Betrieb ist der Notöltank gefüllt und bleibt ohne Auswirkung auf den ordentlichen Ölkreislauf zur Versorgung der Lager der Turboladerwelle. Fällt die Ölzufuhr aus, fliesst das im Notöltank 2 gelagerte Öl über die Leitung 21 in die Lager. Fig. 2 zeigt ein von der Anordnung vergleichbares System, mit einem oberhalb der Welle 3 aufgesetzten Notöltank 2. Der Notöltank weist zwei separate Leitungen 21 und 22 auf, welche je das verdichterseitige und das turbinenseitige Radiallager mit Öl versorgen. Die getrennte Entnahme von Öl auf unterschiedlichen Höhen ermöglicht, wenn die Nachfüllung des Öltanks über die Zuleitung 25 infolge eines Ausfalls der Ölversorgung aussetzt, eine länger andauernde Versorgung des turbinenseitigen Lagers, welches aufgrund der hohen Abgastemperaturen im Turbinenbereich in der Regel beim Abstellen wesentlich heisser wird, als die Lager auf der Verdichterseite.

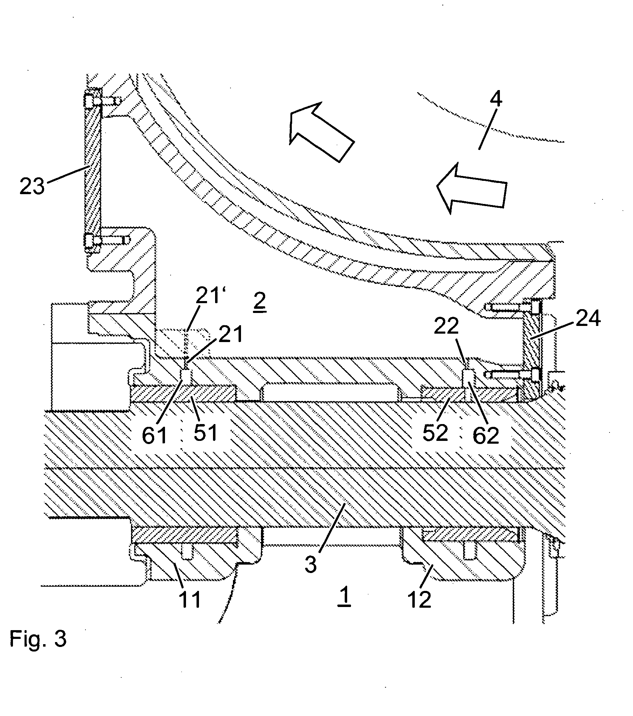

Fig. 3 zeigt einen Schnitt entlang der Welle 3 des Abgasturboladers. Im Lagergehäuse 1 ist die Welle 3, welche an einem Ende das Turbinenrad und am anderen Ende das Verdichterrad trägt, drehbar gelagert. An beiden Enden des Lagergehäuses ist ein Radiallager vorgesehen, das verdichterseitige Radiallager 51 und das turbinenseitige Radiallager 52. Die beiden Radiallager sind je von einer Ölversorgungsrinne 61 bzw. 62 umgeben, welche im Betrieb des Abgasturboladers das Öl entlang dem Umfang der Radiallager verteilen. Das Öl wird über eine nicht dargestellte Zuleitung in den erfindungsgemäss im Lagergehäuse integrierten Notöltank 2 geführt. Dieser erstreckt sich in axialer Richtung über beide Radiallager hinweg. Er ist bezüglich der Schwerkraft oberhalb der Radiallager 51 und 52, bzw. oberhalb der Welle 3 angeordnet, wodurch sichergestellt ist, dass das im Notöltank gelagerte Öl bei Bedarf ohne externe Pumpe oder Druckbeaufschlagung aufgrund der Schwerkraft in die Lager der Welle fliesst.

Damit diese auf der Schwerkraft basierende Ölversorgung gewährleistet ist, muss also der Abfluss des Notöltanks zumindest auf gleicher Höhe sein wie der tiefste Punkt der Welle. Gegebenenfalls kann der Notöltank an bestimmten Stellen auch tiefer hinabreichen, so dass sich etwa Schmutzpartikel in einem solchen Bereich setzen können. Das Öl aus solchen Vertiefungen gelangt bei einer vollständigen Leerung des Notöltanks dann jedoch nicht in die Lager. Die Länge der Leitungen 21 und 22 vom Notöltank 2 zu den jeweiligen Radiallagern ist erfindungsgemäss auf ein Minimum reduziert. Lediglich eine Gehäusewandstärke beträgt die vom Öl zurückzulegende Distanz. Die Leitungen 21 und 22 sind als eine dünne, gebohrte, gefräste oder gestanzte Durchführung in den Radiallagersitzen 11 und 12, also den Gehäuseteilen des Lagergehäuses, welche die Radiallager 51 und 52 umgeben, realisiert. Die erfindungsgemässe Anordnung des Notöltanks im radial inneren Bereich des Lagergehäuses ermöglicht eine kurze Zuleitungslänge für beide Radiallager.

Optional kann durch Anordnung der Mündungen der Leitungen 21 und 22 im Notöltank auf unterschiedlichen Höhenniveaus die Versorgung einer der beiden Radiallager bevorzugt werden. Wird etwa der Boden des Notöltanks im Bereich der Leitung 21' zum verdichterseitigen Radiallager 51 nach radial aussen angehoben, läuft das Öl beim Leerlaufen des Notöltanks länger in das turbinenseitige Radiallager. Der gleiche Effekt wird erzielt, wenn sich, wie in Fig. 4 schematisch dargestellt, der Notöltank im seinem unteren Bereich seitlich entlang der Welle erstreckt und die beiden Durchführungen unterschiedliche Bohrungsrichtungen aufweisen, und beispielsweise die verdichterseitige Leitung 21' vertikal und die turbinenseitige Leitung 22 horizontal verläuft. Der einseitig dargestellte Notöltank kann sich auch auf beiden Seiten der Welle bis über die Welle hinabziehen. In diesem Fall kann für eines oder beide Lager eine zweite Zuleitung von der anderen Seite her vorgesehen sein. Ist nur für eines der Lager eine zweite Zuleitung vorgesehen, wird wiederum dafür gesorgt, dass dieses Lager länger mit Öl versorgt wird.

Im Normalbetrieb erfolgt die Ölversorgung ebenfalls durch den Notöltank 2 und die Leitungen 21 und 22, so dass der Notöltank ständig durchspült wird. Alternativ können separate Ölversorgungsleitungen vorgesehen sein, welche das Öl am Notöltank vorbei direkt in die beiden Ölversorgungsrinnen führen.

Die Nähe des Notöltanks zum Gasaustrittsgehäuse der Abgasturbine bewirkt einen grösseren Wärmeübergang vom heissen Abgas an das Öl im Notöltank. Eine derartige Vorwärmung des Öls im Notöltank kann zur Verminderung der Lagerverluste erwünscht sein, etwa bei 2-Takt-Turboladern mit tiefen Öleintrittstemperaturen von nur etwa 45°C. In der dargestellten Ausführungsform ist der Notöltank 2 durch eine zusätzliche Wand des Gasaustrittsgehäuses vom Strömungskanal 4 mit den heissen Abgasen der Abgasturbine getrennt. Ist eine stärkere Erwärmung des Öls im Notöltank erwünscht, kann optional die Abtrennung zum Strömungskanal einwandig ausgebildet sein. Dabei wird die zusätzliche Wand des Gasaustrittsgehäuses zumindest im Bereich des Notöltanks weggelassen.

Optional kann zwischen den beiden Gehäusewänden eine Isolationsschicht zur thermischen Isolierung vorgesehen sein. Dadurch kann die Ölerwärmung im Notöltank vermindert werden. Die Isolation kann auch auf der Tankseite oder am turbinenseitigen Deckel 24 angebracht sein.

Die Position des integrierten Notöltanks 2 erfordert spezielle konstruktive Massnahmen, um die Giessbarkeit des Lagergehäuses zu ermöglichen. Zur Verankerung der Kerne werden, wie in Fig. 3 angedeutet, verdichterseitig und/ oder turbinenseitig Deckel 23 und 24 angebracht. Die mit den Deckeln abzudichtenden Stellen sind optional so angeordnet, dass sie keine direkte Verbindung zum Luft- oder Abgasstrom haben. Mit optionalen Bohrungen in dem verdichterseitigen Deckel 23 kann die zwischen dem Verdichterrad und dem Lagergehäuse verlaufende Zwischenwand im Bereich des Verdichterrad-Aussendurchmessers durch Spritzöl aus dem Notöltank gekühlt werden.

### Bezugszeichenliste

- 1: Lagergehäuse
- 11: Verdichterseitiger Radiallagersitz
- 12: Turbinenseitiger Radiallagersitz
- 2: Notöltank
- 21 (21'): Leitung vom Notöltank zum verdichterseitigen Radiallager
- 22: Leitung vom Notöltank zum turbinenseitigen Radiallager
- 23: Verdichterseitiger Deckel
- 24: Turbinenseitiger Deckel
- 25: Ölzufuhrleitung
- 3: Welle
- 4: Strömungskanal des Turbinen-Gasaustrittsgehäuses
- 51: Verdichterseitiges Radiallager
- 52: Turbinenseitiges Radiallager
- 61: Ölversorgungsrinne für verdichterseitiges Radiallager
- 62: Ölversorgungsrinne für turbinenseitiges Radiallager

## Patentansprüche

1. Abgasturbolader, umfassend eine Welle (3), ein Lagergehäuse (1) mit mehreren Radiallagern (51, 52) zum Lagern der Welle (3) sowie einen im Lagergehäuse (1) integrierten Notöltank (2), **dadurch gekennzeichnet, dass** der Notöltank (2) sich in axialer Richtung über alle Radiallager (51, 52) erstreckt, und dass der Notöltank (2) oberhalb der Radiallager (51, 52) und mit geringem radialen Abstand zu den Radiallagern (51, 52) angeordnet ist.

2. Abgasturbolader nach Anspruch 1, wobei die Radiallager (51, 52) mit direkten, kurzen Leitungen (21, 22) mit dem Notöltank (2) verbunden sind.

3. Abgasturbolader nach Anspruch 2, wobei die Radiallager (51, 52) lediglich durch eine Gehäusewand vom Notöltank (2) getrennt sind.

4. Abgasturbolader nach Anspruch 2, wobei das Lagergehäuse (1) so gestaltet ist, dass die Leitungen (21, 22) zwischen Notöltank (2) und den Radiallagern (51, 52) durch je mindestens eine Durchführung im jeweiligen Radiallagersitz (11, 12) gebildet werden.

5. Abgasturbolader nach Anspruch 4, wobei die Mündungen der Leitungen (21', 22) im Notöltank (2) auf unterschiedlichem Höhenniveau angeordnet sind.

6. Abgasturbolader nach einem der Ansprüche 1 bis 5, wobei der Notöltank (2) grossflächig mit einem abgasführenden Strömungskanal (4) in Kontakt steht.

7. Abgasturbolader nach Anspruch 6, wobei das Gehäuse zum abgasführenden Strömungskanal (4) hin doppelwandig ausgeführt ist.

8. Abgasturbolader nach Anspruch 7, wobei zwischen den beiden Wandteilen eine thermische Isolation vorgesehen ist.

9. Abgasturbolader nach einem der Ansprüche 1 bis 5, wobei die den Notöltank begrenzenden Gehäuseteile zumindest teilweise mit einer thermischen Isolation versehen sind.

10. Abgasturbolader nach einem der Ansprüche 1 bis 9, wobei der Notöltank (2) mindestens einen Deckel (23, 24) aufweist, und dieser im Spritzölbereich des Lagergehäuses (1) liegt und keinen direkten Kontakt zur Luft- bzw. Abgasströmung hat.

11. Abgasturbolader nach Anspruch 10, wobei zumindest einer der Deckel (24) mit einer thermischen Isolation versehen ist.

12. Abgasturbolader nach Anspruch 10, wobei an der dem Verdichter zugewandten Seite des Notöltanks mindestens ein Deckel (23) vorgesehen ist, und Bohrungen in diesem mindestens einen Deckeln eingelassen sind, zur Kühlung durch Ölspritzer einer zwischen dem Notöltank und dem Verdichterrad angeordneten Zwischenwand.

## Claims

1. Exhaust-gas turbocharger, comprising a shaft (3), a bearing housing (1) with a plurality of radial bearings (51, 52) for mounting the shaft (3), and also an emergency oil tank (2) integrated in the bearing housing (1), **characterized in that** the emergency oil tank (2) extends in the axial direction over all the radial bearings (51, 52), and **in that** the emergency oil tank (2) is arranged above the radial bearings (51, 52) and with a slight radial clearance with respect to the radial bearings (51, 52).

2. Exhaust-gas turbocharger according to Claim 1, the radial bearings (51, 52) being connected to the emergency oil tank (2) by means of direct short lines (21, 22).

3. Exhaust-gas turbocharger according to Claim 2, the radial bearings (51, 52) being separated from the emergency oil tank (2) solely by a housing wall.

4. Exhaust-gas turbocharger according to Claim 2, the bearing housing (1) being configured such that the lines (21, 22) between the emergency oil tank (2) and the radial bearings (51, 52) are formed in each case by at least one leadthrough in the respective radial-bearing seat (11, 12).

5. Exhaust-gas turbocharger according to Claim 4, the issues of the lines (21', 22) in the emergency oil tank (2) being arranged at a different height level.

6. Exhaust-gas turbocharger according to one of Claims 1 to 5, the emergency oil tank (2) being in contact over a large area with a flow duct (4) carrying exhaust gas.

7. Exhaust-gas turbocharger according to Claim 6, the housing being of double-walled design towards the flow duct (4) carrying exhaust gas.

8. Exhaust-gas turbocharger according to Claim 7, thermal insulation being provided between the two wall parts.

9. Exhaust-gas turbocharger according to one of Claims 1 to 5, the housing parts which delimit the emergency oil tank being provided at least partially with thermal insulation.

10. Exhaust-gas turbocharger according to one of Claims 1 to 9, the emergency oil tank (2) having at least one cover (23, 24), and the latter lying in the splash-oil region of the bearing housing (1) and having no direct contact with the air flow or exhaust-gas flow.

11. Exhaust-gas turbocharger according to Claim 10, at least one of the covers (24) being provided with thermal insulation.

12. Exhaust-gas turbocharger according to Claim 10, at least one cover (23) being provided on that side of the emergency oil tank which faces the compressor, and bores being introduced into this at least one cover for the cooling of an intermediate wall, arranged between the emergency oil tank and the compressor wheel, by means of oil splashes.

## Revendications

1. Turbosoufflante à gaz d'échappement, comprenant un arbre (3), un logement de palier (1) avec plusieurs paliers radiaux (51, 52) pour supporter l'arbre (3) ainsi qu'un réservoir d'huile de secours (2) intégré dans le logement de palier (1), **caractérisée en ce que** le réservoir d'huile de secours (2) s'étend dans la direction axiale sur tous les paliers radiaux (51, 52) et **en ce que** le réservoir d'huile de secours (2) est disposé au-dessus des paliers radiaux (51, 52) et est disposé à faible distance des paliers radiaux (51, 52).

2. Turbosoufflante à gaz d'échappement selon la revendication 1, dans laquelle les paliers radiaux (51, 52) sont connectés au réservoir d'huile de secours (2) avec des conduites courtes directes (21, 22).

3. Turbosoufflante à gaz d'échappement selon la revendication 2, dans laquelle les paliers radiaux (51, 52) sont seulement séparés du réservoir d'huile de secours (2) par une paroi de boîtier.

4. Turbosoufflante à gaz d'échappement selon la revendication 2, dans laquelle le logement de palier (1) est configuré de telle sorte que les conduites (21, 22) entre le réservoir d'huile de secours (2) et les paliers radiaux (51, 52) sont formées par au moins un passage dans chaque siège de palier radial (11, 12).

5. Turbosoufflante à gaz d'échappement selon la revendication 4, dans laquelle les embouchures des conduites (21', 22) dans le réservoir d'huile de secours (2) sont disposées à un niveau en hauteur différent.

6. Turbosoufflante à gaz d'échappement selon l'une quelconque des revendications 1 à 5, dans laquelle le réservoir d'huile de secours (2) est en contact sur une grande surface avec un canal d'écoulement (4) conduisant le gaz d'échappement.

7. Turbosoufflante à gaz d'échappement selon la revendication 6, dans laquelle le logement pour le canal d'écoulement (4) conduisant le gaz d'échappement est réalisé avec une double paroi.

8. Turbosoufflante à gaz d'échappement selon la revendication 7, dans laquelle on prévoit une isolation thermique entre les deux parties de paroi.

9. Turbosoufflante à gaz d'échappement selon l'une quelconque des revendications 1 à 5, dans laquelle les parties de logement limitant le réservoir d'huile de secours sont au moins en partie pourvues d'une isolation thermique.

10. Turbosoufflante à gaz d'échappement selon l'une quelconque des revendications 1 à 9, dans laquelle le réservoir d'huile de secours (2) présente au moins un couvercle (23, 24), et celui-ci se trouve dans la région de l'huile de pulvérisation du logement de palier (1) et n'a aucun contact avec l'écoulement d'air ou de gaz d'échappement.

11. Turbosoufflante à gaz d'échappement selon la revendication 10, dans laquelle au moins l'un des couvercles (24) est pourvu d'une isolation thermique.

12. Turbosoufflante à gaz d'échappement selon la revendication 10, dans laquelle on prévoit du côté du réservoir d'huile de secours tourné vers le compresseur, au moins un couvercle (23) et des alésages sont pratiqués dans cet au moins un couvercle, pour refroidir par des pulvérisations d'huile une paroi intermédiaire disposée entre le réservoir d'huile de secours et la roue du compresseur.
